Europäisches Patentamt

European Patent Office

Office européen des brevets

(19)

(11) Veröffentlichungsnummer: **0 374 636**

**A1**

(12) **EUROPÄISCHE PATENTANMELDUNG**

(21) Anmeldenummer: 89122672.2

(22) Anmeldetag: 08.12.89

(51) Int. Cl.5: **H01M 8/24, H01M 8/04**

(30) Priorität: 20.12.88 CH 4695/88

(43) Veröffentlichungstag der Anmeldung:
27.06.90 Patentblatt 90/26

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) Verfahren zur Umwandlung von in einem Stoff als chemisches Potential vorliegender Energie in elektrische Energie basierend auf einem elektrochemischen Hochtemperaturprozess.

(57) Vorrichtung zur Umwandlung von chemischer Energie in elektrische Energie mittels eines elektrochemischen Hochtemperaturprozesses, wobei in einem wärmeisolierten Gefäss (3) Stapel von flachen, ebenen elektrisch in Serie oder gruppenweise serieparallel geschalteter Brennstoffzellen (11) mit Feststoffelektrolyt auf ZrO$_2$-Basis vorgesehen sind und Einrichtungen zur Vorverbrennung und Nachverbrennung sowie Wärmeaustauscher (2, 9) für die Energieübertragung von einem Medienstrom zum anderen vorhanden sind. Ausführung mit 2 Stapeln quer- und längsgestellter Brennstoffzellen (24. 25), die ineinander verschachtelt sind, um optimale Strömungsverhältnisse und Kontakte für die elektrische Serieschaltung der einzelnen Brennstoffzellen-Elemente zu gewährleisten.

FIG.1

FIG. 3

EP 0 374 636 A1

# VORRICHTUNG ZUR UMWANDLUNG VON IN EINEM STOFF ALS CHEMISCHES POTENTIAL VORLIEGENDER ENERGIE IN ELEKTRISCHE ENERGIE BASIEREND AUF EINEM ELEKTROCHEMISCHEN HOCHTEMPERATURPROZESS

## TECHNISCHES GEBIET

Hochtemperatur-Brennstoffzellen zur Umwandlung von chemischer Energie in elektrische Energie. Vorrichtungen zur elektrochemischen Energieumwandlung gewinnen dank ihrer einfachen Handhabung und ihres hohen Wirkungsgrades an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Vorrichtung weitgehend unabhängig vom verwendeten Brennstoff sein soll.

Insbesondere betrifft sie eine Vorrichtung zur Umwandlung von in einem Stoff als chemisches Potential vorliegenden Energie in elektrische Energie basiert auf einem elektrochemischen Hochtemperaturprozess.

## STAND DER TECHNIK

Brennstoffzellen mit keramischem Feststoffelektrolyt sind aus zahlreichen Veröffentlichungen bekannt (vergl. O.Antonsen, W.Baukal und W.Fischer, "Hochtemperatur-Brennstoffbatterie mit keramischem Elektrolyten", Brown Boveri Mitteilungen Januar Februar 1966, Seiten 21 - 30; F.J.Rohr, "High temperature fuel cells", Solid Electrolytes , Academic Press New York 1978, Seiten 431 - 450).

Bei der Entwicklung von Brennstoffzellen mit keramischem Festelektrolyt hat man sich bisher fast ausschliesslich mit der Verbesserung und Verbilligung der keramischen Bauteile befasst (US-A-4,692,274 und US-A-4,395,468). Diese Vorschläge befassen sich mit Anordnungen von röhrenförmigen Brennstoffzellen-Elementen und Einzelheiten der Verschaltung, des Einbaus, der Abdichtung. Es finden sich keine Angaben, wie diese keramischen Elemente in ein fertiges Produkt integriert werden können.

In der US-A-4,342,816 werden Möglichkeiten der Anordnung von Brennstoffzellen in einem zylindrischen Behälter angegeben. Es handelt sich dabei um einen einwandigen Behälter, in den nach bestimmten geometrischen Mustern Stapel von Brennstoffzellen-Elementen so angeordnet sind, dass die Zuführung von Brenngas, Verbrennungsluft und Kühlluft möglich wird. In allen Fällen soll der Stapel gekühlt werden und die Kühlluft von aussen nach innen strömen.

In der Regel wird der Brennstoffzellen-Stapel aufgebaut, indem ebene und profilierte Einzelplatten übereinander gestapelt werden, so dass sich Kanäle bilden, durch die Luft oder Brenngas geleitet wird. Es werden stets parallele Kanalanordnungen gewählt, durch die Luft oder Brenngas strömt (vergl US-A-4,631,229). Bei diesen Anordnungen bereitet die Sammlung und Verteilung der Gase an den Stirnseiten des Plattenstapels grosse Probleme.

Die bisher bekannten Konstruktionen von keramischen Brennstoffzellen und Zellenbatterien lassen bezüglich Bauvolumen, Leistung und Wirkungsgrad sowie Führung der Ströme gasförmiger Medien zu wünschen übrig. Es existiert daher ein grosses Bedürfnis, Brennstoffzellen und ihre Anordnung in konstruktiver und betrieblicher Hinsicht zu verbessern.

## DARSTELLUNG DER ERFINDUNG

Der Erfindung liegt die Aufgabe zugrunde, eine Vorrichtung zur Umwandlung von chemischer Energie in elektrische Energie mittels eines elektrochemischen Hochtemperatur-Prozesses anzugeben, welche eine hohe Leistungskonzentration erzielt, in ihrem Aufbau einfach, gedrängt und kompakt ausgeführt werden kann und eine optimale Betriebsführung mit hohem Wirkungsgrad gewährleistet. Der Art und Weise der Betriebsführung soll ausserdem ein möglichst weiter Spielraum zur Verfügung gestellt werden.

Diese Aufgabe wird dadurch gelöst, dass in der eingangs erwähnten Vorrichtung in einem adiabaten, wärmeisolierten Gefäss mindestens ein Stapel von flachen ebenen, elektrisch in Serie oder gruppenweise serie-parallel geschalteter Brennstoffzellen mit einem keramischen Hochtemperatur-Feststoffelektrolyten auf Zirkonoxydbasis angeordnet ist, und dass Einrichtungen zur Vorverbrennung und zur Nachverbrennung und Wärmeaustauscher für die Energieübertragung von einem Gasstrom an einen anderen Gasstrom oder Flüssigkeitsstrom sowie vom Abgas auf einen externen Kreislauf vorgesehen sind.

## WEG ZUR AUSFÜHRUNG DER ERFINDUNG

Die Erfindung wird anhand des nachfolgenden, durch Figuren näher erläuterten Ausführungsbeispiels beschrieben.

Dabei zeigt:

Fig. 1 einen Aufriss/Längsschnitt durch eine Vorrichtung zur Umwandlung chemischer in elektrische Energie mittels einer Vielzahl von Hochtemperatur-Brennstoffzellen,

Fig. 2 einen Aufriss/Längsschnitt durch ein Detail im unteren Teil der Vorrichtung mit Zuleitungs- und Ableitungskanälen für gasförmige Medien,

Fig. 3 einen Grundriss (Draufsicht)-Horizontalschnitt durch die Anordnung der ineinander verschachtelten Stapel von Brennstoffzellen der Vorrichtung,

Fig. 4 einen Längsschnitt durch ein Detail des schichtweisen Aufbaus der Stapel von Brennstoffzellen an einer Dichtungs- und Einspannstelle,

Fig. 5 den Aufriss/Schnitt durch einen einzelnen porösen keramischen Träger (Plattenelement) für Brennstoffzellen,

Fig. 6 den Grundriss/Schnitt durch einen einzelnen porösen keramischen Träger (Plattenelement) für Brennstoffzellen.

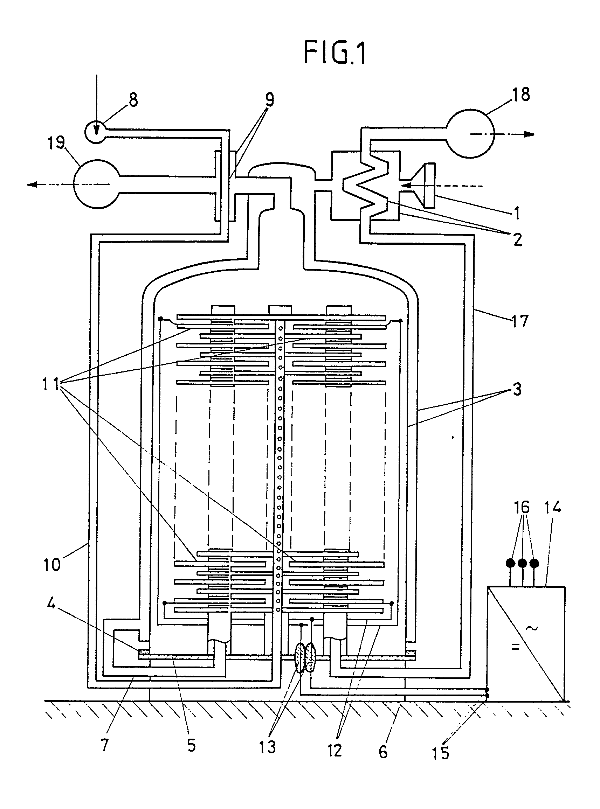

In Fig. 1 ist ein Aufriss/Längsschnitt durch eine Vorrichtung zur Umwandlung chemischer in elektrische Energie mittels ener Vielzahl von Hochtemperatur-Brennstoffzellen dargestellt. 1 ist der Eintrittsstutzen für den gasförmigen Sauerstoffträger (normalerweise Luft $O_2 + 4N_2$), 2 dessen Vorwärmer. Der gasförmige Sauerstoffträger gelangt über einen domartigen Aufsatz in ein doppelwandiges, wärmeisoliertes Gefäss 3 (Doppelmantel-Behälter), das vorzugsweise aus einem warmfesten korrosionsbeständigen Werkstoff (Spezialstahl, Nickellegierung) besteht. Der gasförmige Sauerstoffträger wird im Zwischenraum der Doppelwand des Gefässes 3 weiter aufgeheizt. 4 ist der mit dem Boden 5 fest und gasdicht schliessende Flansch des Gefässes 3. Das Ganze ist auf dem schematisch dargestellten Fundament 6 befestigt. 7 ist das Zuleitungsrohr zu den keramischen Brennstoffzellen für den vorgewärmten gasförmigen Sauerstoffträger, das den Doppelmantel des Gefässes 3 mit der Sauerstoffseite der Zellen in dessen Innenraum verbindet. 8 ist das Eintrittsrohr für den gasförmigen, der Vorrichtung zuzuleitenden Brennstoff ($CH_4$). 9 stellt einen Vorwärmer für den gasförmigen Brennstoff dar. Letzterer gelangt über das Zuleitungsrohr 10 zu den keramischen Brennstoffzellen 11 im Innern des Gefässes 3. 12 sind die elektrischen Leitungen, die von den Elektroden der Brennstoffzellen 11 wegführen und über Durchführungen 13 mit den Gleichspannungsklemmen 15 des nachgeschalteten Wechselrichters (Zerhacker) 14 verbunden sind. 16 stellen dessen Wechselspannungsklemmen dar. 17 ist das Ableitungsrohr für das Ballastgas (Stickstoff) im Falle von Luft als Sauerstoffträger sowie für einen allfällig vorhandenen Sauerstoffrest bei Betrieb der Vorrichtung mit Sauerstoffüberschuss. 18 ist das Austrittsrohr für das Ballastgas (inkl. Sauerstoffrest). 19 stellt das Austrittsrohr für die gasförmigen Reaktionsprodukte (Kohlendioxyd, Wasserdampf) dar.

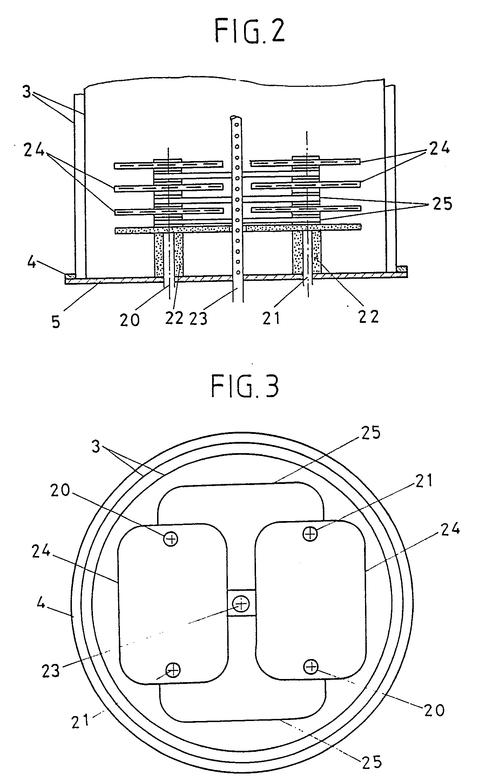

Fig. 2 stellt einen Aufriss/Längsschnitt durch ein Detail im linken Teil der Vorrichtung gemäss Fig. 1 mit Zuleitungs-und Ableitungskanälen für die gasförmigen Medien dar. 3 ist das doppelwandige Gefäss mit seinem Flansch 4 und mit seinem Boden 5 als Abschluss gegen unten. 20 ist der Zuleitungskanal für den gasförmigen Sauerstoffträger, der im untersten Teil durch ein Rohr und einen hohlzylindrischen keramischen Stützkörper 22 und im aktiven Teil durch Offnungen in den gestapelten Brennstoffzellen gebildet wird. 21 ist der analog aufgebaute entsprechende Ableitungskanal für den Sauerstoffträger bzw. das Ballastgas. 23 stellt den zentralen Zuleitungskanal für den gasförmigen Brennstoff dar. Er wird durch ein Rohr gebildet, das im aktiven Teil Oeffnungen aufweist, so dass der Brennstoff in Horizontalebenen radial nach aussen strömt und die Brennstoffzellen gleichmässig beaufschlagt. 24 ist je ein Stapel - bezüglich Aufriss-Zeichnungsebene - quergestellter ebener flacher Brennstoffzellen. 25 ist ein im rechten Winkel zu 24 angeordneter Stapel - bezüglich Aufriss-Zeichnungsebene - längsgestellter ebener flacher Brennstoffzellen. Je zwei Paare von Stapeln 24 und 25 sind derart ineinander verschachtelt, dass auf je 2 in einer Horizontalebene befindliche Zellen des Stapels 24 je 2 ebenfalls in einer Horizontalebene befindliche Zellen des Stapels 25 folgen, und so fort.

Fig. 3 zeigt einen Grundriss (Draufsicht)-Horizontalschnitt durch die Anordnung der ineinander verschachtelten Stapel von Brennstoffzellen gemäss Fig. 2 der Vorrichtung. Die Bezugszeichen entsprechen genau denjenigen der Fig. 2. Die Verschachtelung der quergestellten Stapel 24 und der längsgestellten Stapel 25 sowie die gemeinsamen Zuleitungskanäle 20 und 23 sowie Ableitungskanäle 21 sind deutlich zu überblikken. Der Brennstoffaustritt aus dem Kanal 23 erfolgt gleichmässig radial zur Peripherie (Wandung des Gefässes 3) hin.

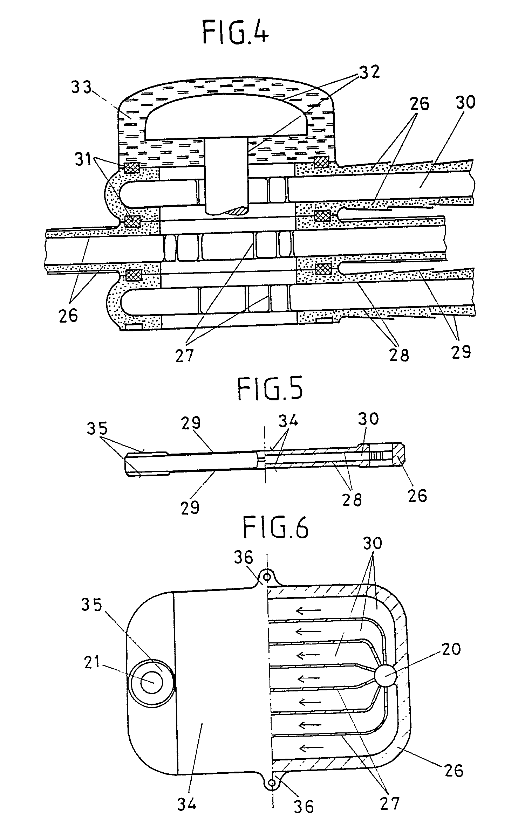

In Fig. 4 ist ein Längsschnitt durch ein Detail des schichtweisen Aufbaus der Stapel von Brennstoffzellen an einer Dichtungs- und Einspannstelle dargestellt. 26 ist ein poröser keramischer Träger für Brennstoffzellen in Form eines flachen ebenen Plattenelements. Das hohle Plattenelement ist mit versteifenden Rippen 27 versehen, die gleichzeitig zur Führung des gasförmigen Sauerstoffträgers dienen. 28 stellt die Sauerstoffseite, 29 die Brennstoffseite des keramischen Trägers 26 dar. 30 ist je ein Kanal für den gasförmigen Sauerstoffträger. Die Kanäle 30 sorgen für optimale Zufuhr und Verteilung des Sauerstoffträgers über die ganze Fläche des Plattenelements. Die keramischen Träger 26 sind mit Nuten für Dichtungen 31 versehen. Der Stapel der Brennstoffzellen bzw. Plattenelemente wird durch den vertikalen Zuganker 32 zusammengehalten. Dieser ist an seinem Kopfende (Einspannstelle) mit einer Endkappe 33 aus keramischem Isolierstoff versehen.

Unter gewissen Umständen ist es vorteilhafter, statt Zuganker zum Zusammenhalten der verschiedenen Stapel aussenliegende U-förmige Klammern zu verwenden.

Fig. 5 stellt den Aufriss/Schnitt durch einen einzelnen porösen keramischen Träger (Plattenelement) für Brennstoffzellen dar. 26 ist der rechteckförmige keramische Träger mit seiner innenliegenden Sauerstoffseite 28 und seiner aussenliegenden Brennstoffseite 29. In der rechten Figurenhälfte (Schnitt) ist der Kanal 30 für den gasförmigen Sauerstoffträger sichtbar. Die Brennstoffseite 29 trägt die aus Elektroden und Feststoffelektrolyt bestehenden aktiven Schichten 34. An den beiden Schmalseiten des keramischen Trägers 26 sind beidseitig Dichtungspassflächen 35 vorgesehen.

Fig. 6 bezieht sich auf den Grundriss/Schnitt durch einen einzelnen porösen keramischen Träger (Plattenelement) für Brennstoffzellen gemäss Fig. 5. 20 und 21 sind die Zu- und Ableitungskanäle für den gasförmigen Sauerstoffträger (siehe Fig. 2 !), die in diesem Teil durch die entsprechenden Oeffnungen von den Schmalseiten des Plattenelements selbst gebildet werden. 27 sind die Rippen im keramischen Träger 26, die die Kanäle 30 abtrennen. Die Zufuhr des gasförmigen Sauerstoffträgers ist durch Pfeile angedeutet. 36 ist je ein elektrischer (galvanischer) Anschluss des aktiven Teils des Plattenelements. Die übrigen Bezugszeichen entsprechen denjenigen der Fig. 5. Die Ecken der Träger 26 sind abgerundet, um eine bessere Ausnutzung des zylindrischen Raums der 4 Stapel zu gewährleisten (siehe Fig. 3 !).

Ausführungsbeispiel

Siehe Fig. 1 bis 6 !

Die Versuchsanlage zur Durchführung des elektrochemischen Prozesses bestand im Wesentlichen aus einer Vielzahl von gestapelt angeordneten keramischen Brennstoffzellen 11, die in einem doppelwandigen wärmeisolierten Gefäss (Doppelmantel behälter ) 3 untergebracht waren. Der innere Mantel des Gefässes bestand aus einem hochchromhaltigen, gegen Schwefel unempfindlichen wärme- und zunderbeständigen Stahl und hatte einen Innendurchmesser von 400 mm bei einer Innenhöhe von 600 mm. Der äussere Mantel dieses glockenförmigen Gefässes 3 bestand aus einem normalen korrosions- und wärmebeständigen 18 Cr / 8 Ni-Stahl. Der Ringspalt zwischen innerem und äusserem Mantel hatte eine radiale lichte Weite von 30 mm. Das doppelwandige Gefäss 3 war mittels eines Flansches 4 mit dem plattenförmigen Boden 5 aus Cr/Ni-Stahl gasdicht verbunden. Das Ganze war wärmeisolierend in eine (in Fig. 1 der Uebersichtlichkeit halber weggelassene) ca. 60 mm dicke Schicht von Mineralwolle eingepackt Zwischen Boden 5 und Fundament 6 war eine ca. 50 mm starke Schicht aus Schamotte angeordnet, die mit entsprechenden Oeffnungen für Leitungen der gasförmigen Medien, der Anschlüsse für den Strom und für Messdaten versehen war. Ausserhalb des Gefässes 3 befand sich der Eintrittsstutzen 1 für den gasförmigen Sauerstoffträger (im vorliegenden Fall Luft), den Vorwärmer (Wärmeaustauscher) 2, das Zuleitungsrohr 7, das Eintrittsrohr 8 für den gasförmigen Brennstoff (im vorliegenden Fall $CH_4$), den Vorwärmer 9, das Zuleitungsrohr 10 und das Ableitungsrohr 17 sowie das Austrittsrohr 18 für das Ballastgas (Stickstoff) und den Sauerstoffrest. Diese Bauelemente waren in Anbetracht der erhöhten Temperaturen und der Oxydationsgefahr aus korrosionsbeständigem Cr/Ni-Stahl gefertigt. Die Brennstoffzellen 11 ruhten auf 4 im Quadrat (im Grundriss betrachtet) angeordneten hohlzylindrischen keramischen Stützkörpern 22, die ihrerseits über Rohrstummel aus Cr/Ni-Stahl auf dem Boden 5 befestigt waren. Das Innere von zwei diagonal gegenüberliegenden Stützkörpern 22 bildete jeweils einen Zuleitungskanal 20 für den gasförmigen Sauerstoffträger (Luft), während die entsprechenden Ableitungskanäle 21 für das Ballastgas (Stickstoff) und den Sauerstoffrest durch das Innere der beiden anderen diagonal gegenüberliegenden Stützkörper gebildet wurde. In der Mitte des Bodens 5 war ebenfalls ein Rohrstummel befestigt, auf dem ein Rohr aus keramischem Material sass, das als Zuleitungsrohr 23 für den gasförmigen Brennstoff diente, welches im oberen Bereich mit Löchern für den radialen Gasübertritt in das Gefäss 3 versehen war. Alle diese der Führung der gasförmigen Medien dienenden Bauelemente waren oberhalb des Bodens 5 gegen die metallischen Rohrstummel mittels keramischem Fasermaterial abgedichtet. Unterhalb des Bodens 5 waren die besagten Rohrstummel gasdicht mit den Rohren 7, 10 und 17 verbunden. Auf den vier Stützkörpern 22 waren total 20 die eigentlichen Brennstoffzellen 11 tragende poröse keramische Träger (Plattenelemente) 26 in zwei Paaren von Stapeln aufgebaut. In einem, im Grundriss gesehen, quadratischen Verbund waren zwei Stapel 25 von längsgestellten (bezüglich Aufriss-Zeichnugnsebene) und zwei Stapel 24 von quergestellten (bezüglich Aufriss-Zeichnungsebene) gegenseitig ineinander geschachtelten ebenen flachen Brennstoffzellen vorhanden Die Anordnung war dergestalt, dass die in einer Flucht liegenden Oeffnungen der die eigentlichen Brennstoffzellen tragenden, porösen keramischen Träger 26 je 2 vertikale Zuleitungskanäle 20 für den gasförmigen Sauerstoffträger (Luft) und je 2 vertikale Ableitungskanäle 21 für das Ballastgas (Stickstoff) und den Restsauerstoff bildeten. Die Stapel 24 und 25 waren an ihren oberen Stirnseiten durch eine runde feuerfeste Keramikplatte (nicht im Detail gezeichnet) abgeschlossen, die an ihrem Umfang gegen den inneren Mantel des Gefässes 3 einen schmalen Ringspalt von ca. 10 mm radialer Breite freiliess. Durch diesen Ringspalt konnten die abziehenden gasförmigen Reaktionsprodukte (Kohlendioxyd, Wasserdampf) über den Vorwärmer (Wärmeaustauscher) 9 in das Austrittsrohr 19 gelangen. Die porösen keramischen Träger (Plattenelement) 26 waren hohl und wiesen Rippen 27 auf, welche die Kanäle 30 für den gasförmigen Sauerstoffträger (Luft) begrenzten. Ihre Sauerstoffseite 28 lag dementsprechend im hohlen Innern, die Brennstoffseite 29 an der äusseren Oberfläche. In letztere waren die aus den Elektroden und dem Feststoffelektrolyten gebildeten aktiven Schichten 34 auf beiden Seiten mit einer totalen Wirkfläche von 420 cm$^2$ eingebettet.

Der keramische Träger 26 bestand aus gesintertem $Al_2O_3$, der Elektrolyt aus mit $Y_2O_3$ dotiertem $ZrO_2$, die direkt auf dem Träger 26 aufliegende Sauerstoff-Elektrode aus einem La/Mn-Perowskit und die aussenliegende Brennstoff-Elektrode aus einem Ni-Cermet. Die Träger 26 hatten eine rechteckige Form von 225 mm Länge, 150 mm Breite und 15 mm Höhe und wiesen abgerundete Ecken auf. Um die die Kanäle 20 und 21 bildenden beiden runden Oeffnungen von 30 mm Durchmesser bei einem Achsbestand von 180 mm waren auf den Stirnseiten ebene Dichtungspassflächen 35 und keramische Dichtungen 31 vorhanden. Die elektrischen galvanischen Anschlüsse 36 waren an den Längsseiten des Trägers 26 angebracht. Je ein Stapel 24 und 25 wurde durch einen mit einer isolierenden keramischen Endkappe 33 ausgerüsteten Zuganker 32 aus einer oxyddispersionsgehärteten Nickelbasis-Superlegierung zusammengehalten. Die Brennstoffzellen 11 waren über elektrische Leitungen 12 in Form von flachen Schienen aus Nickel über elektrisch isolierte Durchführungen 13 mit den Gleichspannungsklemmen 15 eines Geräts zur Umwandlung von Gleichstrom in Wechselstrom in Form eines Wechselrichters 14 verbunden. Dessen Wechselspannungsklemmen 16 gaben die Energie als Dreiphasenstrom ab.

Die Anlage wurde mit CH$_4$ als Brennstoff und mit Luft als gasförmiger Sauerstoffträger betrieben.

Das CH$_4$ war zuvor versuchsbedingt mittels einer äusseren Heizung (nicht eingezeichnet) auf ca. 650 $^\circ$C vorgewärmt worden. Die Luft wurde im Vorwärmer 2 auf ca. 500 $^\circ$C vorgewärmt und im Doppelmantel des Gefässes 3 weiter auf ca. 650 $^\circ$C aufgeheizt, so dass die beiden miteinander reagierenden gasförmigen Medien beim Eintritt in die Stapel 24 und 25 der Brennstoffzellen 11 ungefähr die gleiche Temperatur aufwiesen. Der den Stapeln 24 und 25 zugeleitete Volumenstrom von Luft betrug 1,68 l/s bezogen auf Standardbedingungen. Der entsprechende Volumenstrom von CH$_4$ war 0,084 l/s (Standardbedingungen). Die Brennstoffzellen 11 wurden bei einer Temperatur von 800 $^\circ$C betrieben. Die dem chemischen Potential entsprechende zugeführte Lei stung betrug 3,0 kW. Entsprechend der Serieschaltung mehrerer aktiven Schichten 34 erreichte die Spannung pro Träger (Plattenelement) 26 den Wert von 7,8 V. Durch die Stapelung von 10 Plattenelementen 26 übereinander ergab sich eine Klemmenspannung von 78 V an den Gleichspannungsklemmen 15. Der Strom betrug 20 A, die Klemmenleistung auf der Gleichspannungsseite 1,56 kW. Die Stromdichte der einzelnen Brennstoffzelle 11 betrug 0,215 A/cm$^2$, die Zellenspannung 0,78 V und die spezifische Leistung 0,186 W/cm$^2$. Der Gesamtwirkungsgrad ergab sich somit zu 0,52.

Die Abluft verliess die Stapel 24 und 25 mit einer Temperatur von ca. 820 $^\circ$C, während die Reaktionsprodukte (Abgas) ca. 960 $^\circ$C aufwiesen. Beide gasförmigen Medien wurden zusammengeführt und nachverbrannt (nicht eingezeichnet). Der Vorwärmer 2 für den gasförmigen Sauerstoffträger (Luft) war in Abweichung zu Fig. 1 der Nachbrennkammer nachgeschaltet.

Die Erfindung ist nicht auf das Ausführungsbeispiel beschränkt.

Ganz allgemein basiert die Vorrichtung auf einem elektrochemischen Hochtemperaturprozess, wobei in einem adiabaten, wärmeisolierten Gefäss 3 mindestens ein Stapel von flachen ebenen, elektrisch in Serie oder gruppenweise serie-parallel geschalteter Brennstoffzellen 11 mit einem keramischen Hochtemperatur-Feststoffelektrolyten auf Zirkonoxydbasis angeordnet ist und Einrichtungen zur Vorverbrennung und zur Nachverbrennung und Wärmeaustauscher 2, 9 für die Energieübertragung von einem Gasstrom an einen anderen Gasstrom oder Flüssigkeitsstrom sowie vom Abgas auf einen externen Kreislauf vorgesehen sind. Vorzugsweise besteht das Gefäss 3 aus einem doppelwandigen glockenförmigen Behälter und einem diesen tragenden Flansch 4 mit Boden 5, wobei letzterer alle Durchführungen für die Zuleitungen 7, 10 und die Ableitungen 17 des Brennstoffs, des Sauerstoffträgers in Form von Verbrennungsluft oder von angereichertem Sauerstoff, der gasförmigen Reaktionsprodukte sowie für die elektrischen Leitungen 12, 13 enthält. Zu- und Ableitungen 10, 17 für gasförmige Medien sowie die Zuleitung 7 für den Sauerstoffträger sind vorteilhafterweise im Boden 5 und die Ableitung 19 für die Abgase im oberen zentralen Teil des glockenförmigen Behälters 3 untergebracht.

Die Vorrichtung weist an der Eintrittsstelle 1 des Sauerstoffträgers mit Vorteil einen Verdichter zur Erzeugung eines geringen Ueberdrucks des Sauerstoffträgers gegenüber dem gasförmigen Brennstoff und einen Differentialdruckregler zur Konstanthaltung dieser Druckdifferenz auf. Zur guten Wärmeausnutzung sind mindestens ein Wärmeaustauscher 2, 3, 9 in mindestens einer der Zu- und Ableitungen 1, 8, 7, 10, 17 der gasförmigen Medien Sauerstoffträger, Brennstoff und Reaktionsprodukte vorgesehen. Der zwischen äusserem und innerem Mantel des doppelwandigen Behälters 3 vorhandene ringförmige Raum ist vorzugsweise als Wärmeaustauscher ausgebildet. Im Falle des teilweisen oder ausschliesslichen Betriebs mit flüssigen Brennstoffen ist mindestens ein Wärmeaustauscher 9 gleichzeitig als Verdampfer für flüssige Brennstoffe ausgebildet.

In der bevorzugten Ausführung der Vorrichtung sind je 2 paarweise ineinandergreifende, im Grundriss um 90° gegeneinander um die Achse des Gefässes 3 versetzte Stapel 24, 25 aus porösen keramischen, mit Wülsten versehenen Trägern 26 in Form von Plattenelementen für Brennstoffzellen vorhanden, wobei je 2 um 180° gegeneinander versetzte Träger 26 in der gleichen Ebene angeordnet und alle 4 Einzelstapel 24, 25 an 4 gemeinsamen Einspannstellen axial zusammengehalten und radial in ihrer Lage fixiert sind. Die Einspannstellen sind hohl ausgeführt und enthalten im Innern Zuganker 32 zum axialen Zusammenhalten der Stapel 24, 25, oder entsprechende, seitlich angeordnete Klammern.

Vorzugsweise ist ein zentraler, im aktiven Teil mit Oeffnungen versehener Zuleitungskanal 23 für den Brennstoff vorgesehen und die Zufuhr des Sauerstoffträgers erfolgt durch je eine zu mindestens einem Stapel gehörende Einspannstelle. Die Brennstoffzufuhr erfolgt vorteilhafterweise im wesentlichen radial zur Achse des Behälters 3 und die Abgasabfuhr durch Sammlung zwischen der Aussenkante des keramischen Trägers 26 einer jeden Brennstoffzelle und der Innenwand des Behälters 3 mit Umlenkung in die axiale Richtung des letzteren.

Die Vorteile der neuen Vorrichtung zur Umwandlung von chemischer in elektrische Energie sind folgende:
- Kühlung des Stapels der Brennstoffzellen durch endotherme zur Gaskonvertierung herangezogene chemische Prozesse statt der verlustreichen Kühlung von aussen.
- Hohlplatten als elektrochemische Elemente.

- Ungezwungene radiale Austreibung des Brennstoffs dank konstruktiver Gestaltung der Anordnung (perforiertes zentrales Rohr für die Zuführung, von Brennstoffzellen-Platten gebildeter Ringkanal).
- Doppelwandiges Gefäss mit Wärmeaustauscherfunktion als äussere Begrenzung.

## Ansprüche

1. Vorrichtung zur Umwandlung von in einem Stoff als chemisches Potential vorliegender Energie in elektrische Energie basierend auf einem elektrochemischen Hochtemperaturprozess, dadurch gekennzeichnet, dass in einem adiabaten, wärmeisolierten Gefäss (3) mindestens ein Stapel von flachen ebenen, elektrisch in Serie oder gruppenweise serie-parallel geschalteter Brennstoffzellen (11) mit einem keramischen Hochtemperatur-Feststoffelektrolyten auf Zirkonoxydbasis angeordnet ist, und dass Einrichtungen zur Vorverbrennung und zur Nachverbrennung und Wärmeaustauscher (2, 9) für die Energieübertragung von einem Gasstrom an einen anderen Gasstrom oder Flüssigkeitsstrom sowie vom Abgas auf einen externen Kreislauf vorgesehen sind.

2. Vorrichtung nach Anspruch 1, dadurch gekennzeichnet, dass das Gefäss (3) aus einem doppelwandigen glockenförmigen Behälter und einem diesen tragenden Flansch (4) mit Boden (5) besteht, wobei letzterer alle Durchführungen für die Zu (7, 10)- und Ableitungen (17) des Brennstoffs, des Sauerstoffträgers in Form von Verbrennungsluft oder von angereichertem Sauerstoff, der gasförmigen Reaktionsprodukte sowie für die elektrischen Leitungen (12, 13) enthält.

3. Vorrichtung nach Anspruch 1, dadurch gekennzeichnet, dass das Gefäss (3) aus einem doppelwandigen glockenförmigen Behälter und einem diesen tragenden Flansch (4) und Boden (5) mit Zu- und Ableitungen (10, 17) für gasförmige Medien sowie einer Zuleitung (7) für den Sauerstoffträger und einer Ableitung (19) für die Abgase im oberen zentralen Teil des glockenförmigen Behälters (3) besteht.

4. Vorrichtung nach Anspruch 1, dadurch gekennzeichnet, dass an der Eintrittsseite (1) des Sauerstoffträgers ein Verdichter zur Erzeugung eines geringen Ueberdrucks des Sauerstoffträgers gegenüber dem gasförmigen Brennstoff und ein Differentialdruckregler zur Konstanthaltung dieser Druckdifferenz vorgesehen ist.

5. Vorrichtung nach Anspruch 1, dadurch gekennzeichnet, dass mindestens ein Wärmeaustauscher (2, 3, 9) in mindestens einer der Zu- und Ableitungen (1, 8, 7, 10, 17) der gasförmigen Medien Sauerstoffträger, Brennstoff und Reaktionsprodukte vorgesehen ist.

6. Vorrichtung nach Anspruch 2 und 5, dadurch gekennzeichnet, dass der zwischen äusserem und innerem Mantel des doppelwandigen Behälters (3) vorhandene ringförmige Raum als Wärmeaustauscher ausgebildet ist.

7. Vorrichtung nach Anspruch 5, dadurch gekennzeichnet, dass mindestens ein Wärmeaustauscher (9) gleichzeitig als Verdampfer für flüssige Brennstoffe ausgebildet ist.

8. Vorrichtung nach Anspruch 1, dadurch gekennzeichnet, dass je 2 paarweise ineinandergreifende, im Grundriss um 90° gegeneinander um die Achse des Gefässes (3) versetzte Stapel (24, 25) aus porösen keramischen, mit Wülsten versehenen Trägern (26) in Form von Plattenelementen für Brennstoffzellen vorhanden sind, wobei je 2 um 180° gegeneinander versetzte Träger (26) in der gleichen Ebene angeordnet sind und dass alle 4 Einzelstapel (24, 25) an 4 gemeinsamen Einspannstellen axial zusammengehalten und radial in ihrer Lage fixiert sind.

9. Vorrichtung nach Anspruch 8, dadurch gekennzeichnet, dass die Einspannstellen hohl ausgeführt sind und im Innern Zuganker (32) zum axialen Zusammenhalten der Stapel (24, 25) enthalten.

10. Vorrichtung nach Anspruch 8, dadurch gekennzeichnet, dass die Stapel (24, 25) durch seitlich angeordnete Klammern axial zusammengehalten sind.

11. Vorrichtung nach Anspruch 8, dadurch gekennzeichnet, dass ein zentraler, im aktiven Teil mit Oeffnungen versehener Zuleitungskanal (23) für den Brennstoff vorgesehen ist und dass die Zufuhr des Sauerstoffträgers durch je eine zu mindestens einem Stapel gehörende Einspannstelle erfolgt.

12. Vorrichtung nach Anspruch 8, dadurch gekennzeichnet, dass die Brennstoffzufuhr im wesentlichen radial zur Achse des Behälters (3) und die Abgasabfuhr durch Sammlung zwischen der Aussenkante des keramischen Trägers (26) einer jeden Brennstoffzelle und der Innenwand des Behälters (3) und Umlenkung in die axiale Richtung des letzteren erfolgt.

# FIG.1

# FIG.2

# FIG.3

88/131

## FIG.4

## FIG.5

## FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 606 762 (M. HSU) * Seite 17, Absatz 2 - Seite 20, Absatz 1; Figuren 8,9,10 * | 1,5 | H 01 M 8/24 H 01 M 8/04 |
| Y | | 2,4,6,7 | |
| | --- | | |
| X | US-A-3 718 506 (W. FISCHER et al.) * Figur 1, Spalte 3, Zeile 48 - Spalte 5, Zeile 10; Spalte 6, Zeilen 21-24 * | 1,5 | |
| | --- | | |
| X | PATENT ABSTRACTS OF JAPAN, Band 12, Nr. 174 (E-612)[3021], 24. Mai 1988; & JP-A-62 283 570 (MITSUBISHI HEAVY IND. LTD) 09-12-1987 * Zusammenfassung * | 1,5,6,7 | |
| | --- | | |
| Y | EP-A-0 061 068 (ENERGY RESEARCH CORP.) * Seite 3, Zeilen 10-23; Patentanspruch 1 * | 4 | |
| | --- | | |
| Y | PATENT ABSTRACTS OF JAPAN, Band 7, Nr. 140 (E-182)[1285], 18. Juni 1983; & JP-A-58 53 164 (TOKYO SHIBAURA DENKI K.K.) 29-03-1983 * Zusammenfassung * | 4 | RECHERCHIERTE SACHGEBIETE (Int. Cl.5) H 01 M |
| | --- | | |
| X | US-A-3 146 131 (H.R. LINDEN et al.) * Figur 1; Spalte 3, Zeilen 5-28,42-55; Spalte 6, Zeilen 11-21,22-25 * | 1,5,7 | |
| | --- | | |
| Y | PATENT ABSTRACTS OF JAPAN, Band 11, Nr. 110 (E-496)[2557], 7. April 1987; & JP-A-61 259 461 (HITACHI LTD) 17-11-1986 * Zusammenfassung * | 2 | |
| | ---      -/- | | |

Der vorliegende Recherchenbericht wurde für alle Patentansprüche erstellt

| Recherchenort | Abschlußdatum der Recherche | Prüfer |
|---|---|---|
| DEN HAAG | 06-03-1990 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 485 676 (J.E. HODSON)<br>* Figuren 1,9; Spalte 6, Zeilen 13-32;<br>Spalte 7, Zeilen 15-50 *<br>--- | 6,7 | |
| A | PATENT ABSTRACTS OF JAPAN, Band 12, Nr.<br>397 (E-672)[3244], 21. Oktober 1988; &<br>JP-A-63 138 666 (MITSUBISHI HEAVY IND)<br>10-06-1988<br>* Zusammenfassung *<br>--- | 1,5 | |
| A | PATENT ABSTRACTS OF JAPAN, Band 12, Nr.<br>385 (E-668)[3232], 14. Oktober 1988; &<br>JP-A-63 128 559 (MITSUBISHI HEAVY IND)<br>01-06-1988<br>--- | 1,5,6 | |
| A | US-A-3 377 203 (H.H. MOBIUS et al.)<br>* Figur 1; Spalte 5, Zeilen 36-40 *<br>--- | 1,5,6 | |
| A | PATENT ABSTRACTS OF JAPAN, Band 11, Nr.<br>4 (E-468)[2451], 7. Januar 1987; &<br>JP-A-61 179 067 (HITACHI LTD)<br>11-08-1986<br>--- | | RECHERCHIERTE SACHGEBIETE (Int. Cl.5) |
| E | EP-A-0 355 420 (FUJI ELECTRIC CO.)<br>* Beispiele 3,5; Figuren 9,10,13;<br>Patentansprüche 1,2 *<br>--- | 1,5 | |
| A | US-A-4 548 875 (J.R. LANCE et al.)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 06-03-1990 | D'HONDT J.W. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes
    Dokument